# EUROPEAN PATENT APPLICATION

(11) **EP 2 017 416 A2**
(43) Date of publication of application: **21.01.2009**
(21) Application number: 08154002.3
(22) Date of filing: 03.04.2008
(51) Int. Cl.: E05D 3/12, F21S 6/00, F21V 21/14

(54) **Articulation device, particularly for lamps**

(30) Priority: 03.04.2007 IT MI20070687
(71) Applicant: Cassina S.P.A., 20036 Meda (IT)
(72) Inventor: Zenaboni, Luca Andrea, I-20010, PREGNANA MILANESE (Milano) (IT)
(74) Representative: Rondano, Davide

(57) **Abstract**

The articulation device comprises a first element (3), a second element (4), an intermediate joint (5) interposed between the first and second element (3, 4), a pair of non-aligned articulation pins (6) through which the intermediate joint (5) is articulated both to the first element (3) and to the second element (4), and symmetrical rotation means (10, 10') operatively associated to the first element (3), to the second element (4) and to the intermediate joint (5) to bring about, in case of rotation of one of the elements (3, 4) with respect to the intermediate joint (5), a symmetrical rotation of the other element (4, 3) with respect to the intermediate joint (5). The symmetrical rotation means (10, 10') comprise a flexible pulling member (10) connected at its ends to the first element (3) and to the second element (4), respectively, in points spaced apart from the axes of the articulation pins (6), the flexible pulling member (10) being partially wound in a given direction around the first pin of the pair of articulation pins (6) and in the opposite direction around the second pin of the pair of articulation pins (6).

## Description

The present invention refers to an articulation device, particularly for lamps.

As is known, when it is desired to obtain the articulation of two elements which have to be able to rotate 360 degrees relative to one another, an intermediate joint is used which basically consists of a block defining a pair of pins spaced from one another, the two elements being articulated with these pins in such a manner that they can be rotated 360 degrees relative to one another in superimposed relationship.

In these known embodiments the angle assumed by the intermediate joint with respect to the elements to be articulated is normally random, whereby, in addition to an aesthetic appearance not much pleasant, excessive loads may occur which result in damages when it is desired to arrange the two articulated elements in superimposed relationship.

In order to try to solve such a problem, solutions have already been proposed which prove to be particularly complicated in structural terms and which, as a general rule, are based on the use of toothed couplings which cause the intermediate joint to rotate symmetrically with respect to the two elements connected in articulated manner by means of the joint itself.

These embodiments on the one hand have a particularly complicated structure, as they consist of a great number of components, and on the other often have a remarkable impact on the aesthetical appearance, which has dramatically limited their use so far.

It is therefore the object of the present invention to solve the above-stated problem, by providing an articulation device, particularly for lamps, which offers the possibility of obtaining the symmetrical rotation of the articulated elements with respect to the intermediate joint, without having to rely on kinematical couplings having toothings or other gears. A further object of the invention is to provide an articulation device which proves to be particularly simple in structural terms and which in addition does not require changes to the structures typically used for obtaining the articulation. Another object of the present invention is to provide an articulation device which is able to ensure at the highest level reliability, safety in use, and coordination of the movement. Finally, a further object of the present invention is to provide an articulation device, particularly for lamps, which can be manufactured in an easy and not expensive way starting from elements and materials commonly available on the market.

These and other objects are fully achieved according to the invention by virtue of an articulation device, particularly for lamps, having the features defined in the characterizing portion of independent Claim 1.

Further advantageous features of the articulation device according to the invention are set forth in the dependent claims.

The invention will be illustrated now purely by way of indicative and non-limitative example with reference to the appended drawings, in which:

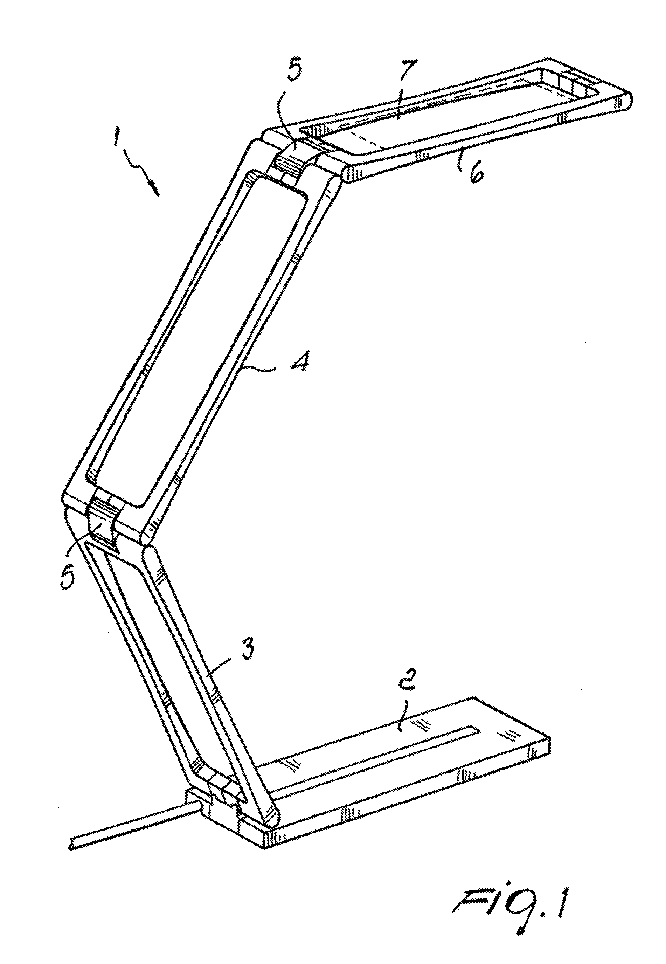

Figure 1 is a perspective view schematically showing a lamp using at least one articulation device according to the invention;
Figure 2 shows the lamp of Figure 1 in the compacted position in which the relevant components are superimposed;
Figure 3 is a perspective view schematically showing the articulation device according to the invention;
Figure 4 schematically shows the articulation device of Figure 3 in the condition in which the two articulated elements are aligned with one another;
Figure 5 illustrates the symmetrical rotation of the two articulated elements by means of the articulation device of Figure 3;
Figure 6 schematically shows the articulation device of Figure 3 in the condition in which the two articulated elements are superimposed.

With reference to the cited figures, reference numeral 1 generally indicates a lamp comprising a base 2, a first element 3 connected to the base 2, a second element 4 articulated to the first element 3 by means of a first intermediate joint 5, a third element 6 articulated to the second element 4 by means of a second intermediate joint, which is also indicated with the reference numeral 5 as it is totally identical to the first intermediate joint connecting the first element 3 to the second element 4, and a lighting body 7 supported by the third element 6.

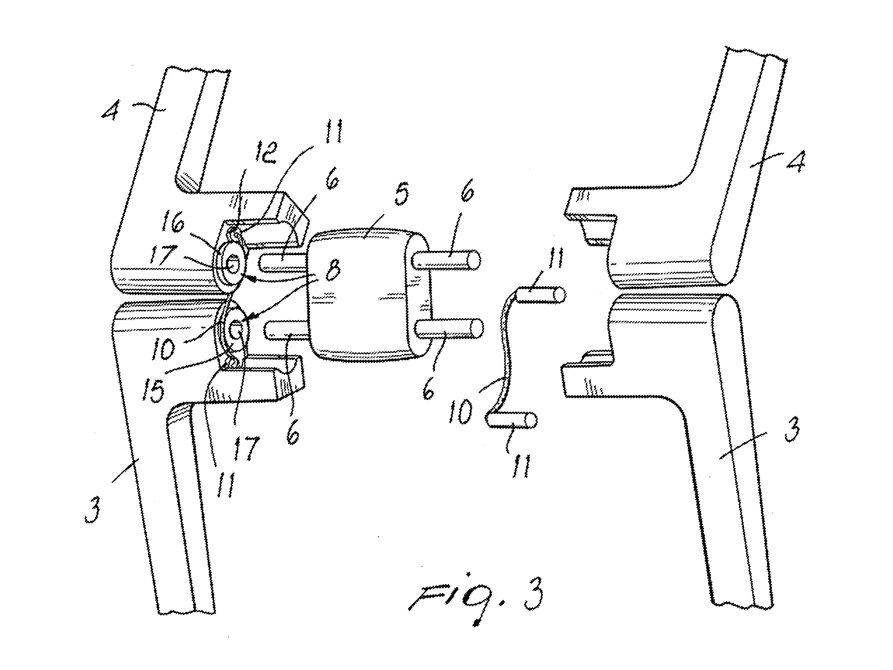

Taking into account the articulation device between the first element 3 and the second element 4, which are preferably made as flat frames, according to a preferred embodiment the intermediate joint 5 has a pair of articulation pins 6 for articulation with the first element 3 and with the second element 4 (Figure 3), respectively, which pins 6 are drivingly connected to the intermediate joint 5. Advantageously, the pins 6 are provided on both their opposite vertical faces of the intermediate joint 5, in such a manner that the intermediate joint 5 can be connected to each element 3, 4 in two points spaced apart in the horizontal direction, i.e. in the direction of the axes of the pins 6.

The pins 6 are inserted into respective hinges 8 defined within the elements 3, 4. Advantageously, the hinges 8 are friction hinges, that is to say, hinges able to hold the relative angular position between the two articulated elements. The hinges 8 are for example of the type illustrated in International Patent Application W01991/020125, which is to be intended as herein incorporated by reference.

Obviously, the arrangement of the pins 6 and of the hinges 8 may be inverted, that is to say, the pins may be drivingly connected to the elements 3, 4 to be articulated and the hinges 8 may be defined within the intermediate joint 5.

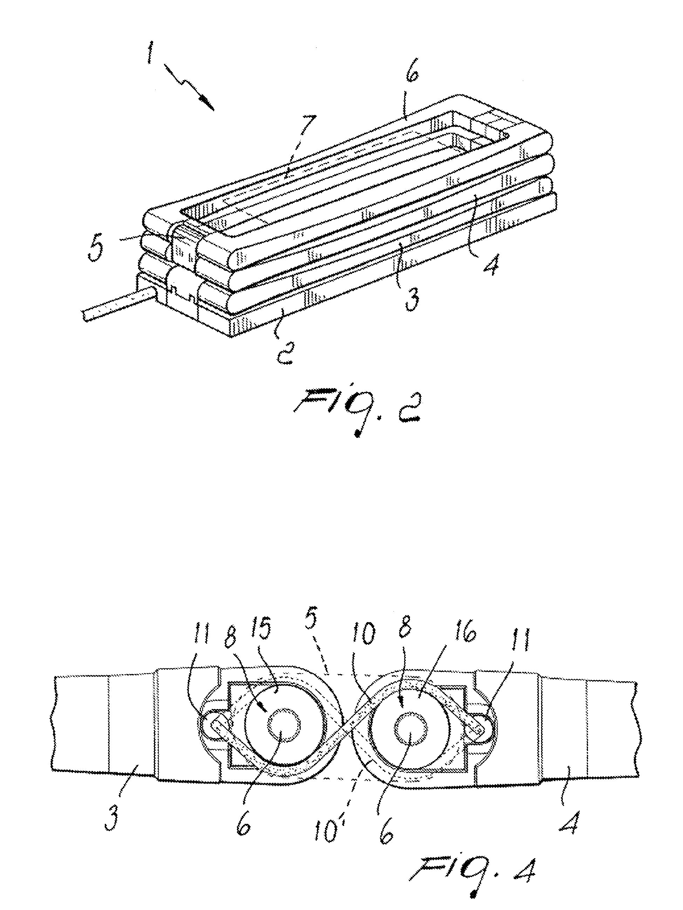

According to the invention, there are provided means for rotating symmetrically the articulated elements 3, 4 with respect to the intermediate joint 5. As shown in Figures 3 to 6, said symmetrical rotation means are obtained by means of a flexible pulling member, advantageously constituted by a cable 10 of metal or other material which is secured at its ends to the first element 3 and to the second element 4, respectively, in points spaced apart with respect to the axis of rotation of the pins 6. In the condition shown in Figure 4, in which the two elements 3 and 4 are aligned, the points in which the cable 10 is secured to the elements 3 and 4 are aligned with the centres of the pins 6 and are arranged on opposite sides to these latter. Advantageously, the cable 10 is connected at its ends to respective cylindrical members 11 inserted into slots 12 provided in the elements 3 and 4.

The cable 10 extends so as to embrace a portion of each pin 6. More in particular, with reference to the condition shown in Figure 4, the cable 10 extends from left to right with respect to a person observing Figure 4 in one direction (counter-clockwise direction) around a first ring-like member 15 coaxial with a hole 17 of the hinge 8 into which the pin 6 of the first element 3 is inserted and in the opposite direction (clockwise direction) around a second ring-like member 16 coaxial with a hole 17 of the hinge 8 into which the pin 6 of the second element 4 is inserted.

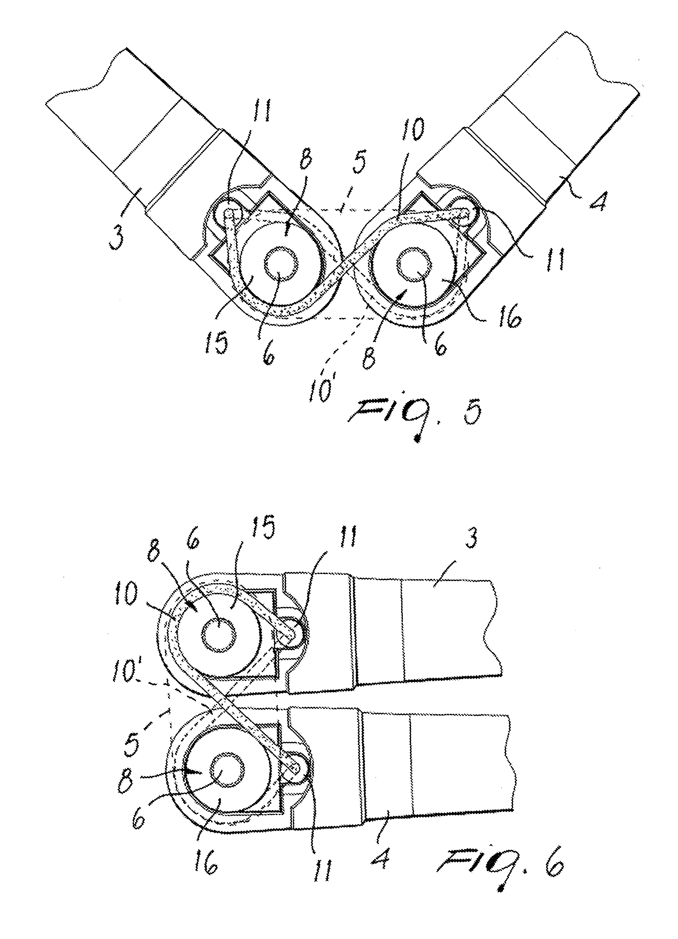

With reference in particular to Figures 5 and 6, if the cable 10 is further wound around the first ring-like member 15 due to the counter-clockwise rotation of the first element 3 about the axis of the respective pin 6, by virtue of the above-described arrangement a pulling force is generated in the cable 10 which tends to unwind the cable 10 from the second ring-like member 16 and accordingly to rotate the second element 4 symmetrically (i.e. the same angle but in the opposite direction) with respect to the respective pin 6. Inverting the direction of rotation obviously results in inverting the pulling action from one element to the other.

In order to make the operation of the articulation device symmetrical, a pair of cables 10 and 10' extending in opposite directions with respect to one another are preferably provided for each pair of pins 6. In other words, in addition the first cable 10 extending in counter-clockwise direction around the ring-like member 15 of the first element 3 and in clockwise direction around the ring-like member 16 of the second element 4, a second cable 10' (represented in dashed line) is provided for each pair of pins 6 and extends in clockwise direction around the ring-like member 15 of the first element 3 and in counter-clockwise direction around the ring-like member 16 of the second element 4.

In case of an intermediate joint having a first pair of pins on the one face and a second pair of pins on the opposite face, as in the embodiment shown in the enclosed drawings, it is preferable to arrange the first cable around the pins of the one face and the second cable around the pins of the opposite face.

As well evident in Figures 4 to 6, the articulation device with intermediate joint according to the invention allows always to obtain a symmetrical rotation of the two articulated elements with no need to resort to structurally complicated components. The symmetrical positioning of the two articulated elements is in fact ensured simply by the provision of at least one cable wound in opposite directions around the respective articulation pins between the intermediate joint and the two elements.

Naturally, the principle of the invention remaining unchanged, the embodiments and constructional details may vary widely with respect to those described and illustrated purely by way of non-limiting example. For example, the material used, the dimensions and the shape of the different components of the articulation device according to the invention may be widely changed depending on the specific requirements.

## Claims

1. Articulation device, particularly for lamps (1), comprising a first element (3), a second element (4), an intermediate joint (5) interposed between the first element (3) and the second element (4), and at least one pair of non-aligned articulation pins (6) through which the intermediate joint (5) is articulated both to the first element (3) and to the second element (4),
**characterized in that** it further comprises symmetrical rotation means (10, 10') operatively associated to the first and second element (3, 4) and to the intermediate joint (5) to bring about, in case of rotation of one of the elements (3, 4) with respect to the intermediate joint (5), a symmetrical rotation of the other element (4, 3) with respect to the intermediate joint (5).

2. Articulation device according to Claim 1, wherein said symmetrical rotation means (10, 10') comprise at least one flexible pulling member (10) connected at its ends to the first element (3) and to the second element (4), respectively, in points spaced apart from the axes of the articulation pins (6), the flexible pulling member (10) being partially wound in a given direction around the first pin of said at least one pair of articulation pins (6) and in the opposite direction around the second pin of said at least one pair of articulation pins (6).

3. Articulation device according to Claim 1 or Claim 2, further comprising friction hinges (8) with each of which a respective articulation pin (6) engages.

4. Articulation device according to Claim 3, wherein the articulation pins (6) are drivingly connected to the intermediate joint (5) and the friction hinges (8) are provided in the first and second element (3, 4).

5. Articulation device according to any of Claims 2 to 4, wherein said at least one flexible pulling member (10) is connected at its ends to cylindrical members (11) inserted into slots (12) provided in the first and second element (3, 4).

6. Articulation device according to any of Claims 2 to 5, wherein said at least one flexible pulling member (10) is wound around a first ring-like member (15) coaxial to the first articulation pin (6) and around a second ring-like member (16) coaxial to the second articulation pin (6).

7. Articulation device according to any of Claims 2 to 6, wherein said symmetrical rotation means (10, 10') comprise a second flexible pulling member (10') connected at its ends to the first element (3) and to the second element (4), respectively, in points spaced apart from the axes of the articulation pins (6), the second flexible pulling member (10') being partially wound around the first and second pin of said at least one pair of articulation pins (6) in opposite directions with respect to the first pulling member (10).

8. Articulation device according to any of the preceding claims, comprising two pairs of articulation pins (6), the one pair being interposed between the two elements (3, 4) and a first face of the intermediate joint (5) and the other pair being interposed between the two elements (3, 4) and a second face of the intermediate joint (5) opposite to the first one.

9. Articulation device according to Claim 7 and Claim 8, wherein the first flexible pulling member (10) is wound around the pins of said first pair of articulation pins (6) and the second flexible pulling member (10') is wound in opposite directions around the pins of said second pair of articulation pins (6).

10. Lamp (1) comprising at least one articulation device according to any of the preceding claims.
